# EUROPEAN PATENT APPLICATION

(11) **EP 1 466 821 A2**
(43) Date of publication of application: **13.10.2004**
(21) Application number: 03024863.7
(22) Date of filing: 31.10.2003
(51) Int. Cl.: B62J 15/02

(54) **Device for fixing a bicycle's mudguard to supporting stays**

(30) Priority: 08.04.2003 IT vr20030043
(71) Applicant: Orion-Italy Componenti Biciclette Srl, 35013 Cittadella (PD) (IT)
(72) Inventor: Favaro, Andrea, 31050 Cavasagra di Vedelago (TV) (IT)
(74) Representative: Petraz, Gilberto Luigi

(57) **Abstract**

A device (10) in moulded synthetic material for fixing the mudguard of a bicycle to support rods comprises a central curved portion (11) delimited by a pair of uprights (14) inside each of which is a cavity or notch (20) designed to accommodate a support rod; each upright (14) also comprises an opening communicating with the cavity or notch (20) and at least partially dividing the upright (14) into two opposite parts. It also comprises a fixing means (18) cooperating with the two opposite parts in order to clamp the support rod after it has been inserted in the cavity or notch (20).

## Description

### TECHNICAL FIELD

This invention concerns a device for fixing the mudguard of a bicycle to support rods that can be constrained to the respective fork of a wheel of the bicycle.

More specifically, this invention refers to a U bolt comprising an arched portion that can be fixed to the mudguard of a bicycle and couplings for the respective support rods.

This invention can be mainly applied in the manufacturing industry of bicycles and components for bicycles.

### BACKGROUND ART

It is known that a U bolt supporting the mudguard of a bicycle, excluding particular bicycles mainly off-road and all-terrain types which sometimes do not even have a mudguard, is fixed to the forks of the respective wheel by means of rods.

There is at least one of these rods for each edge of the mudguard and they are fixed in various ways to the forks and to the mudguard with means usually consisting of snap-fit couplings and, in some cases, by screw threads.

Since lightness is considered to be an important feature of a bicycle, particularly complex couplings and devices are awkward as they are too large and too heavy.

A device for fixing the mudguard to the support rods of the type known to the background art presents a central curved portion delimited by a pair of tubular uprights designed to firmly accommodate the respective rods.

The central curved portion generally has holes for the insertion of fixing means of the device to the mudguard, these fixing means usually consisting of metal bolts.

The rod is often threaded so that, when inserted in the respective tubular upright, it can be fixed by means of a through nut, screwed onto the rod and when in operation positioned underneath the U bolt, and a cap nut screwed onto the top of the rod protruding from the upper part of the upright.

The preliminary positioning of the U bolt on the mudguard before the final fixing is achieved by screwing the through nut and, if the rod protrudes too far beyond the tubular upright, by cutting off the excess part of the rod.

There are also types of fixing devices that foresee the use of clamps designed to fix the rod to the U bolt without the need for threaded couplings.

In this case too, the assembly of the device foresees cutting off any excess portion of the rod and then covering the cut part by means of a plug or cap that can be made from metal or plastic.

One disadvantage is represented by the fact that the assembly of the U bolt envisages adjustment of the device with respect to the mudguard and subsequent intervention on the rods, these operations inevitably having an effect on assembly times and therefore on production costs.

One solution to these problems has already been proposed in Italian patent no. 1300289 which foresees a mudguard support U bolt equipped with tubular elements in which the rods are inserted and their length can be adjusted.

The rods are then fixed in place by clamping them against the walls of the tubular elements.

While resolving the disadvantages described above, this U bolt is not without limitations in terms of the complexity of its shape and the consequent difficulty in producing it.

### DESCRIPTION OF THE INVENTION

This invention proposes to provide an improved device, for fixing the mudguard of a bicycle to support rods, that can eliminate or significantly reduce the disadvantages described above.

This invention also proposes to provide a fixing device that can be easily produced so as to be economically advantageous.

This is achieved by means of an improved device, for fixing the mudguard of a bicycle to support rods with the features described in the main claim.

The dependent claims describe advantageous embodiments of the invention.

According to one embodiment of the invention, the improved device, for fixing the mudguard of a bicycle to support rods comprises a central curved portion delimited by a pair of hollow uprights, each upright presenting a basic fixed half-casing hinged to a mobile half-casing which can be opened according to a rotation axis parallel to the longitudinal axis of the upright.

According to another embodiment of the invention, the device comprises a central curved portion delimited by a pair of uprights, each of which has a longitudinal cavity designed to accommodate a connecting rod, each upright also presenting a longitudinal slot communicating with the respective cavity, and in which a fixing means, for example a screw, acts inside the slot in order to bring the edges closer together.

According to the invention the fixing means between the two half-casings consist of at least one screw, the axis of which is substantially at right angles to the longitudinal axis of the respective upright.

At least one of the two half-casings presents a blind cavity, externally accessible from the longitudinal end of the upright distal to the curved portion, shaped according to the configuration of the road to be housed inside the upright.

The fixing screw between the two half-casings can interact directly with the rod inserted in the hollow upright, exercising a pressing action which ensures the stability of the fixing means, or can cross through the entire mobile half-casing and screw into the fixed half-casing alongside the blind cavity.

In this case, the clamping between the two half-casings exercises a pressing force that ensures an adequate friction intensity indispensable to lock the rod inside the respective hollow upright.

Advantageously the fixing device is made from composite plastic obtained with a single mould which also includes the mobile half-casings with the respective connecting hinges.

### DESCRIPTION OF THE DRAWINGS

Other features and advantages of the invention will become evident on reading the following description of one embodiment of the invention, given as a non-binding example, with the help of the enclosed drawings, in which:
- figure 1 shows a prospective view slightly from above of a device according to the invention;
- figure 2 shows a view from below of an upright of the device in figure 1; and
- figure 3 shows a prospective view slightly from above of a device turned upside down according to another embodiment.

### DESCRIPTION OF ONE EMBODIMENT

In the figures, the reference number 10 indicates in general a fixing device, in the case in question a device 10 for fixing the mudguard of a bicycle to support rods.

The fixing device 10 is a single piece consisting of a central curved portion 11, with a lamellar appearance, presenting holes 12 which can be arranged symmetrically.

The holes 12 are designed to accommodate means for fixing the device 10 to the mudguard of the bicycle.

The curved portion has an axial symmetry being equipped, at each end, a horizontal tab 13 connected to a respective hollow upright 14.

The delimitation zones between the curved portion 11 and the tab 13, and the tab 13 and the respective upright 14, present junction points 15 to avoid the presence of sharp edges.

Each hollow upright 14 consists of a fixed half-casing 16, integral with the tab 13, and a mobile half-casing 17 which can be opened along an axis of rotation parallel to the longitudinal axis of the upright 14.

The fixed half-casing 16 has a lamellar configuration while the mobile half-casing 17 is semi-cylindrical.

The fixing means between the two half-casings 16, 17 can consist of a screw 18 inserted in a stepped housing 19 protruding from the mobile half-casing 17 at its longitudinal end distal to the curved portion 11.

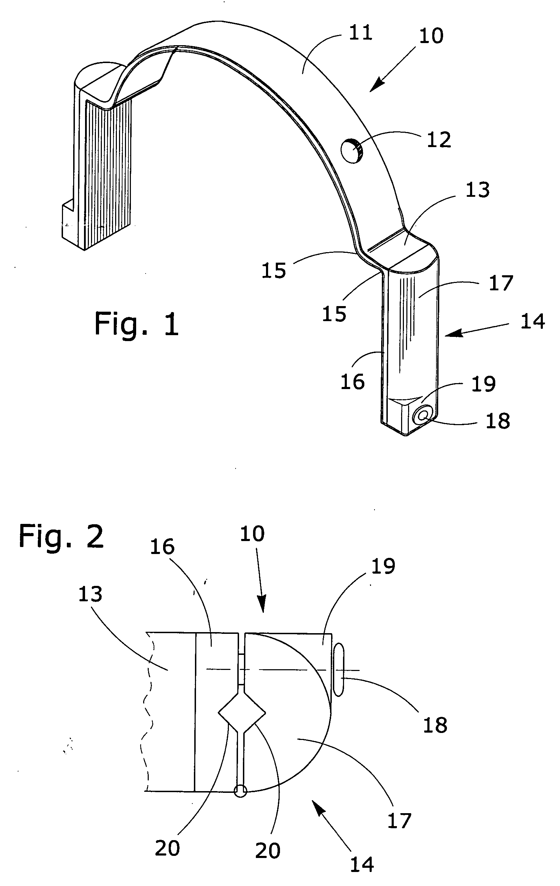

As can be seen in figure 2, each half-casing 16, 17 presents a notch 20, designed to accommodate the respective rod for supporting the mudguard (not shown in the drawings).

The screw 18 is positioned laterally with respect to the notches 20 so that when the two half-casings 16, 17 are clamped together, the rod enclosed between them is locked in place.

When the half-casings 16, 17 are clamped together, the notches 20 form a cavity which can have a square cross-section whose diagonal lies along the plane that divides the two half-casings 16, 17; in this way, the pressing action exercised by the screw 18 is balanced by reacting forces that act on the faces of the cavity causing greater friction.

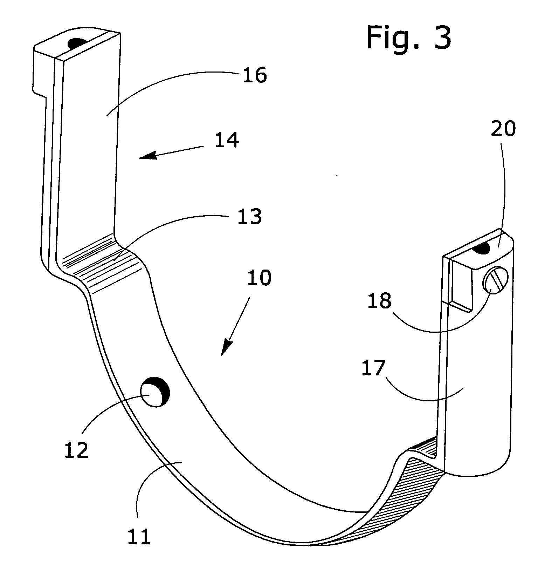

With reference to figure 3, it can be seen that the notch 20 presents, for example, a semicircular cross-section involving only the mobile half-casing 17. According to this variation the screw 18 penetrates the cavity in the upright 14 directly striking against the rod and clamping it in place.

The fixing device 10 consists of a single piece in composite plastic material obtained from a single mould including the mobile half-casings 17 and the respective hinge couplings with the fixed half-casings 16.

The assembly of the rod by insertion in the respective hollow upright 14 is extremely easy since it is possible to adjust the length of the rod engaged in the cavity and to clamp the mobile half-casing 17 against the fixed one 16 by turning the screw 18.

This avoids the presence of portions of protruding rods and the assembly does not therefore foresee any cutting operation.

According to another embodiment of the invention, not illustrated in the figures, the uprights cannot be opened and have only a longitudinal cavity, similar to the notch 20 of the embodiment described above, designed to accommodate a connecting rod.

In this case, the cavity is decentralized with respect to the longitudinal axis of the upright, and a longitudinal slit extends for a certain length from the lower edge of the upright and communicates with the cavity.

A fixing means, for example a self-tapping fixing screw, is inserted in the slot at right angles to the upright and acts in such a way that the opposite edges of the upright, on either side of the slit, come closer together.

In this way, when a rod is inserted in the cavity, the opposite edges of the upright with respect to the slit move apart, making it easier to insert the rod in the cavity; turning the fixing means then brings the edges closer together, thus firmly clamping the rod inside the cavity.

The invention is described above with reference to a preferred embodiment.

It is nevertheless clear that the invention is susceptible to numerous variations, within the framework of technical equivalents.

## Claims

1. A device (10) in moulded synthetic material for fixing the mudguard of a bicycle to support rods comprises a central curved portion (11) delimited by a pair of uprights (14) each presenting a cavity or notch (20) designed to accommodate a support rod, **characterised in that** each upright (14) also comprises an opening communicating with the cavity or notch (20) and at least partially dividing the upright (14) into two opposite parts, and **in that** it also comprises a fixing means (18) cooperating with the two opposite parts in order to clamp the support rod after it has been inserted in the cavity or notch (20).

2. A device according to claim 1, **characterised in that** each upright (14) presents a fixed half-casing (16) hinged and fixed to a mobile half-casing (17) which can be opened along a rotation axis parallel to an axis of the upright.

3. A device (10) according to claim 2, **characterised in that** it is made from composite plastic material obtained with a single mould in a single piece also including the mobile half-casings (17) with the respective connecting hinges.

4. A device (10) according to claim 2 or 3, **characterised in that** the fixing means of the half-casings (16, 17) consist of at least one screw (18) presenting an axis which is substantially at right angles to the longitudinal axis of the respective hollow upright (14).

5. A device (10) according to any of the claims from 2 to 4, **characterised in that** at least one of the two half-casings (16, 17) presents a blind notch (20), externally accessible from the longitudinal end of the upright (14), distal from the curved portion (11).

6. A device (10) according to any of the foregoing claims, **characterised in that** the notches (20), in each of the two half-casings (16, 17), form a cavity with a square cross-section whose diagonal lies along the plane dividing the two half-casings (16, 17).

7. A device (10) according to claim 6, **characterised in that** the clamping screw (18) is positioned laterally with respect to the notches (20).

8. A device (10) according to any of the claims from 2 to 5, **characterised in that** the notch (20) is present in only the mobile half-casing (17).

9. A device (10) according to claim 8, **characterised in that** the notch (20) has a semicircular cross-section.

10. A device (10) according to any of the claims from 2 to 9, **characterised in that** each mobile half-casing(17) has a semi-cylindrical external configuration.
